# DEMANDE DE BREVET EUROPEEN

(11) **EP 1 437 289 A1**
(43) Date de publication de la demande: **14.07.2004**
(21) Numéro de dépôt: 04290032.4
(22) Date de dépôt: 07.01.2004
(51) Int. Cl.: B62D 6/00, B62D 5/00

(54) **Colonne de direction pour véhicule automobile, son procédé de commande et véhicule automobile correspondant**

(30) Priorité: 10.01.2003 FR 0300268
(71) Demandeur: Peugeot Citroen Automobiles SA, 78140 Vélizy Villacoublay (FR)
(72) Inventeur: Lamanda, Yannick, 91120 Palaiseau (FR)
(74) Mandataire: Lanceplaine, Jean-Claude

(57) **Abrégé**

Cette colonne de direction comprend au moins un arbre (2), un moteur électrique (4) comportant un rotor (6) et un stator (10), des moyens de solidarisation (8), au moins en rotation, du rotor par rapport audit arbre (2), et des moyens de montage du stator sur une structure du véhicule.

Des moyens de commande du moteur électrique (4) sont également prévus, qui sont aptes à actionner ce moteur en fonction de la valeur du rapport entre, d'une part, une valeur instantanée représentative de l'état dynamique instantané du véhicule et, d'autre part, une valeur de consigne représentative d'un état dynamique donné de ce véhicule.

## Description

La présente invention concerne une colonne de direction pour véhicule automobile, un procédé de commande de cette colonne, ainsi qu'un véhicule automobile pourvu d'une telle colonne.

Elle se rapporte au domaine de la stabilisation des véhicules automobiles, afin de conférer à ces derniers une trajectoire correcte, quelles que soient les circonstances de circulation.

L'invention trouve notamment, mais non exclusivement, son application lors du freinage du véhicule, dans des conditions d'adhérence dites dissymétriques. Ce phénomène, encore appelé « µ split », se produit par exemple lorsque les roues respectivement droites et gauches du véhicule progressent sur des sols présentant des adhérences différentes.

Ainsi, dans le cas où les roues gauches roulent sur un sol présentant une bonne adhérence, tel que du goudron, alors que les roues droites roulent sur un sol présentant une adhérence plus faible, comme de la neige, le véhicule subit un moment de lacet. Ceci correspond à un pivotement autour d'un axe vertical du véhicule, entraînant alors ce dernier vers la gauche.

Dans l'état de la technique, on a déjà proposé de nombreuses solutions afin de maintenir, dans la mesure du possible, la stabilité de la trajectoire d'un véhicule soumis aux conditions évoquées ci-dessus. Cependant, ces différentes propositions ne se sont guère révélées satisfaisantes, dans la mesure où elles se rapportent principalement à la réalisation d'algorithmes, destinés à agir de manière automatique sur la direction et/ou le freinage du véhicule.

Ceci étant précisé, l'invention se propose de réaliser un dispositif qui, tout en stabilisant de façon satisfaisante la trajectoire du véhicule, soit d'une structure simple, peu coûteux et puisse être utilisé sur de nombreux types de véhicules.

A cet effet, elle a pour objet une colonne de direction pour véhicule automobile, comprenant au moins un arbre, caractérisée en ce qu'elle comprend en outre un moteur électrique comportant un rotor et un stator, des moyens de solidarisation, au moins en rotation, du rotor par rapport audit arbre, des moyens de montage dudit stator sur une structure du véhicule, ainsi que des moyens de commande du moteur électrique, aptes à actionner ce moteur en fonction de la valeur du rapport entre, d'une part, une valeur instantanée représentative de l'état dynamique instantané du véhicule et, d'autre part, une valeur de consigne représentative d'un état dynamique donné de ce véhicule.

Selon d'autres caractéristiques de l'invention :
- les moyens de commande comprennent des moyens de mesure de différents paramètres liés à l'état dynamique du véhicule, des moyens de calcul, aptes à calculer la valeur instantanée représentative de l'état dynamique du véhicule à partir desdits paramètres, ainsi que des moyens de comparaison entre ladite valeur instantanée et ladite valeur de consigne, qui sont aptes à actionner le moteur électrique ;
- la colonne comprend un arbre supérieur, un arbre intermédiaire, ainsi qu'un arbre inférieur, et le rotor du moteur électrique est solidarisé à la partie supérieure de cet arbre intermédiaire ;
- les moyens de solidarisation du rotor par rapport à l'arbre comprennent des moyens de solidarisation à la fois en rotation et en translation, notamment une clavette ;
- les moyens de montage du stator sur la structure du véhicule comprennent des moyens, notamment une glissière, assurant le débattement en translation, selon une direction de débattement, du stator par rapport à la structure, ainsi que des moyens d'articulation, permettant l'articulation du stator par rapport à la structure autour d'un axe d'articulation ;
- la direction de débattement et l'axe d'articulation sont globalement perpendiculaires entre eux, alors que cette direction de débattement et cet axe d'articulation sont tous deux globalement perpendiculaires à l'arbre de la colonne de direction ; et
- la colonne de direction appartient à un système de direction assistée, notamment de type hydraulique ou électro-hydraulique.

L'invention a également pour objet un procédé de commande de la colonne de direction telle que définie ci-dessus, caractérisé en ce qu'on actionne le moteur électrique lorsque la valeur instantanée représentative de l'état dynamique instantané du véhicule est différente de la valeur de consigne, et en ce qu'on arrête ce moteur lorsque cette valeur instantanée devient à nouveau égale à cette valeur de consigne.

Selon une autre caractéristique de l'invention, la valeur représentative de l'état dynamique du véhicule est la vitesse de lacet du véhicule.

L'invention a enfin pour objet un véhicule automobile comprenant une colonne de direction telle que définie ci-dessus.

L'invention sera mieux comprise à la lecture de la description qui va suivre, donnée uniquement à titre d'exemple non limitatif, et faite en se référant aux dessins annexés, dans lesquels :
- la figure 1 est une vue en perspective, illustrant partiellement une colonne de direction pour véhicule automobile conforme à l'invention ;
- la figure 2 est une vue schématique, illustrant la fixation d'un moteur électrique, dont est pourvue la colonne de la figure 1, sur la caisse du véhicule ; et
- la figure 3 est une vue schématique, illustrant des moyens de commande du moteur électrique des figures précédentes.

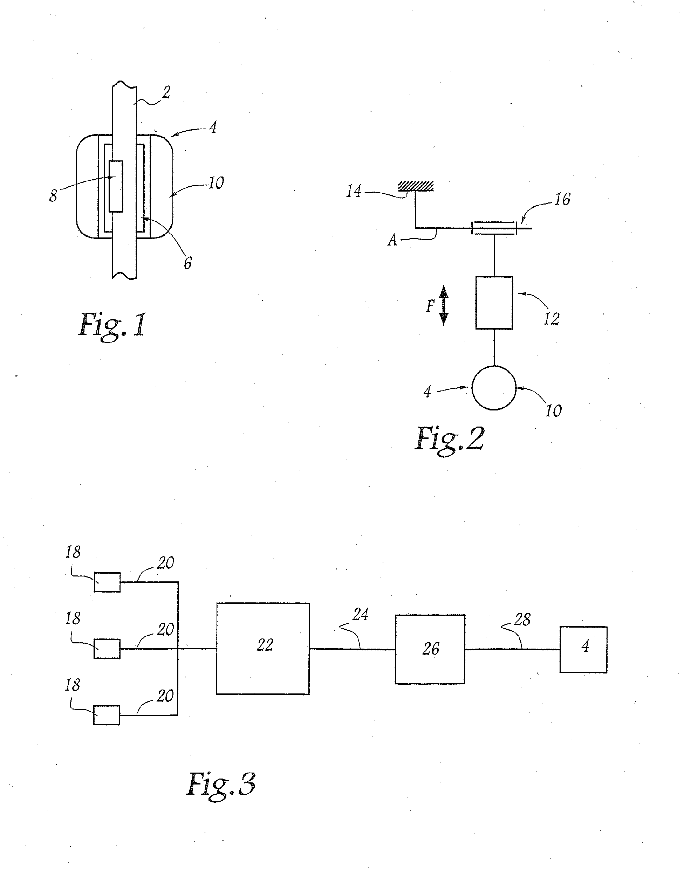

La figure 1 illustre, de façon partielle, une colonne de direction pour véhicule automobile, appartenant à un système de direction assistée hydraulique ou électro-hydraulique. Cette colonne comprend, de façon connue, trois arbres disposés les uns derrière les autres.

Il s'agit tout d'abord d'un arbre supérieur, non représenté, coopérant avec le volant également non représenté. A l'autre extrémité de la colonne, il est prévu un arbre inférieur, non représenté, qui est pourvu d'un pignon coopérant avec la crémaillère de direction, également non représentée.

Enfin, la colonne comprend un arbre intermédiaire 2, plus particulièrement représenté sur cette figure 1. La partie supérieure de cet arbre intermédiaire 2 est munie d'un moteur électrique 4, connu en tant que tel, par exemple de type synchrone.

L'implantation de ce moteur 4 au sommet de l'arbre intermédiaire 2 est avantageuse. En effet, il s'agit d'un endroit relativement dégagé, situé de surcroît dans l'habitacle, où l'environnement est moins chaud et moins agressif que dans le compartiment moteur.

De façon classique, ce moteur 4 comprend un rotor 6, solidarisé à l'arbre intermédiaire 2 par tout moyen approprié, par exemple une clavette 8. Il est par ailleurs prévu un stator 10, monté sur la structure du véhicule, comme illustré sur la figure 2.

Le stator 10 du moteur électrique 4 est solidaire d'une glissière 12, qui assure un débattement de ce stator en translation, selon une direction globalement perpendiculaire à l'arbre intermédiaire 2, qui est matérialisée par la flèche F. L'ensemble formé par le stator 10 et la glissière 12 est en outre articulé sur la structure 14 du véhicule, au moyen d'une charnière 16.

Une telle articulation s'opère autour d'un axe A, qui s'étend de façon globalement perpendiculaire à l'arbre intermédiaire 2, ainsi qu'à la direction de déplacement F de la glissière 12. Une telle disposition permet au stator 10 de suivre d'éventuels mouvements de la colonne de direction, en particulier lorsque le conducteur règle son volant en hauteur et en profondeur.

La figure 3 illustre des moyens de commande, associés au moteur électrique 4 décrit ci-dessus.

Ainsi, on y retrouve plusieurs capteurs 18, de type connu en soi. Ces derniers sont aptes à mesurer différents paramètres liés à l'état dynamique du véhicule, notamment en ce qui concerne d'éventuels mouvements de lacet, correspondant à un pivotement du véhicule autour d'un axe vertical.

De tels capteurs 18 sont notamment des accéléromètres, destinés à la mesure de l'accélération latérale du véhicule. Ils sont reliés, via des lignes 20, à un calculateur 22 adapté pour déterminer, à partir des mesures qui lui sont délivrées par les lignes 20, une valeur instantanée resprésentative de l'état dynamique du véhicule. Cette valeur correspond par exemple à la vitesse de lacet du véhicule.

Ce calculateur 22 se trouve en outre relié, via une ligne 24, à un comparateur 26 adapté pour comparer, à chaque instant, la valeur instantanée représentative de l'état dynamique du véhicule, fournie par le calculateur, avec une valeur de consigne. Cette dernière est en l'occurrence une vitesse de lacet de consigne, qui est déterminée à partir de l'angle du volant et de la vitesse du véhicule, donnés par des capteurs déjà existants. Le comparateur 26 est enfin relié, via une ligne de commande 28, au moteur électrique 4.

En service, lorsque la valeur représentative de l'état dynamique du véhicule devient différente de la valeur de consigne précitée, à savoir par exemple que la vitesse de lacet réelle est différente de la vitesse de lacet de consigne, le comparateur 26 actionne, via la ligne de commande 28, le moteur électrique 4.

Le calculateur 22 détermine alors l'intensité du couple à appliquer au moteur électrique 4, afin d'annuler la différence précitée entre les vitesses de lacet respectivement réelle et de consigne. La valeur de ce couple se traduit ainsi par une intensité de courant, devant être envoyée au moteur électrique 4.

Il convient de noter que, étant donnée l'utilisation qui en est faite par l'invention, il n'est pas nécessaire que le moteur électrique 4 soit de dimensions importantes.

En effet, la limitation en couple d'un moteur électrique provient essentiellement des problèmes thermiques générés par l'échauffement, du fait de l'effet joule, au niveau des enroulements du stator. Ainsi, l'échauffement du moteur augmente lorsque ce dernier est utilisé pendant une durée importante et/ou avec un couple élevé.

Or, dans la présente invention, le moteur électrique n'est mis en service que pendant une durée assez courte, avec un couple relativement peu élevé. Dans ces conditions, le moteur électrique est utilisé essentiellement en régime impulsionnel, de sorte qu'il est à même de présenter un poids faible, ainsi que des dimensions globales restreintes, ce qui facilite son implantation et ne perturbe pas la fonction direction.

A titre indicatif, le diamètre extérieur du stator est avantageusement inférieur à 100 mm, alors que la masse globale du moteur électrique est avantageusement inférieure à 1 kg. De la sorte, l'inertie supplémentaire, due à la présence de ce moteur, est négligeable par rapport à l'inertie globale due principalement au volant.

L'invention n'est pas limitée à la correction de trajectoires, lors de situations d'adhérence anormale, telles que le « µ split » évoqué ci-dessus. Elle trouve en effet son application à d'autres cas de figure, dans lesquels il y a lieu d'agir sur la direction proprement dite, par exemple en complément de l'assistance hydraulique lors de manoeuvres de garage : le dispositif de l'invention permet donc d'assurer la fonction d'assistance variable.

L'invention permet de réaliser les objectifs précédemment mentionnés.

En effet, le moteur électrique auquel il est fait appel ne présente qu'un très faible impact sur l'ensemble de la direction de série du véhicule. Ainsi, ce moteur n'a que peu d'influence au niveau inertiel, étant donné qu'il implique seulement une augmentation faible et locale du diamètre de la colonne.

Par ailleurs, aucun frottement ni amortissement supplémentaire ne sont introduits au niveau du système de direction. Enfin, le surcoût impliqué par la présence de ce moteur électrique est réduit.

Enfin, l'invention est tout particulièrement avantageuse lorsqu'elle s'applique à une direction assistée de type hydraulique ou électro-hydraulique. Dans ce cas, le moteur électrique, qui se trouve sur la colonne de direction, est donc placé en amont de l'assistance.

Ceci permet de bénéficier de prestations supplémentaires, sans bouleverser pour autant l'architecture des véhicules actuels, et de profiter pleinement de l'assistance précitée. En effet, étant donné que le moteur est placé en amont de cette dernière, dès qu'un couple est exercé sur la colonne de direction par l'intermédiaire de ce moteur, l'assistance se trouve aussitôt actionnée, ce qui permet de n'appliquer au moteur qu'un faible couple.

## Revendications

1. Colonne de direction pour véhicule automobile, comprenant au moins un arbre (2), **caractérisée en ce qu'**elle comprend en outre un moteur électrique (4) comportant un rotor (6) et un stator (10), des moyens de solidarisation (8), au moins en rotation, du rotor (6) par rapport audit arbre (2), des moyens (12, 16) de montage dudit stator sur une structure (14) du véhicule, ainsi que des moyens (18, 22, 26) de commande du moteur électrique (4), aptes à actionner ce moteur en fonction de la valeur du rapport entre, d'une part, une valeur instantanée représentative de l'état dynamique instantané du véhicule et, d'autre part, une valeur de consigne représentative d'un état dynamique donné de ce véhicule.

2. Colonne de direction selon la revendication 1, **caractérisée en ce que** les moyens de commande comprennent des moyens de mesure (18) de différents paramètres liés à l'état dynamique du véhicule, des moyens de calcul (22), aptes à calculer la valeur instantanée représentative de l'état dynamique du véhicule à partir desdits paramètres, ainsi que des moyens (26) de comparaison entre ladite valeur instantanée et ladite valeur de consigne, qui sont aptes à actionner le moteur électrique.

3. Colonne de direction selon la revendication 1 ou 2, **caractérisée en ce que** ladite colonne comprend un arbre supérieur, un arbre intermédiaire (2), ainsi qu'un arbre inférieur, et **en ce que** le rotor (6) du moteur électrique (4) est solidarisé à la partie supérieure de cet arbre intermédiaire (2).

4. Colonne de direction selon l'une quelconque des revendications précédentes, **caractérisée en ce que** les moyens de solidarisation du rotor par rapport à l'arbre (2) comprennent des moyens de solidarisation à la fois en rotation et en translation, notamment une clavette (8).

5. Colonne de direction selon l'une quelconque des revendications précédentes, **caractérisée en ce que** les moyens de montage du stator (10) sur la structure (14) du véhicule comprennent des moyens, notamment une glissière (12), assurant le débattement en translation, selon une direction de débattement (F), du stator (10) par rapport à ladite structure (14), ainsi que des moyens d'articulation (16), permettant l'articulation du stator (10) par rapport à ladite structure (14), autour d'un axe d'articulation (A).

6. Colonne de direction selon la revendication 5, **caractérisée en ce que** la direction de débattement (F) et l'axe d'articulation (A) sont globalement perpendiculaires entre eux, et **en ce que** cette direction de débattement (F) et cet axe d'articulation (A) sont tous deux globalement perpendiculaires à l'arbre (2) de la colonne de direction.

7. Colonne de direction selon l'une quelconque des revendications précédentes, **caractérisée en ce qu'**elle appartient à un système de direction assistée, notamment de type hydraulique ou électro-hydraulique.

8. Procédé de commande de la colonne de direction conforme à l'une quelconque des revendications précédentes, **caractérisé en ce qu'**on actionne le moteur électrique (4) lorsque la valeur instantanée représentative de l'état dynamique instantané du véhicule est différente de la valeur de consigne, et **en ce qu'**on arrête ce moteur (4) lorsque cette valeur instantanée devient à nouveau égale à cette valeur de consigne.

9. Procédé selon la revendication 8, **caractérisé en ce que** la 'valeur représentative de l'état dynamique du véhicule est la vitesse de lacet du véhicule.

10. Véhicule automobile comprenant une colonne de direction conforme à l'une quelconque des revendications 1 à 7.
